# EUROPEAN PATENT APPLICATION

(11) **EP 4 046 768 A1**
(43) Date of publication of application: **24.08.2022**
(21) Application number: 20876742.6
(22) Date of filing: 01.10.2020
(51) Int. Cl.: B29B 11/16, B29K 105/06, B29C 43/22, B29C 43/48, B29C 70/50

(54) **METHOD FOR MANUFACTURING MOLDED ARTICLE**

(30) Priority: 18.10.2019 JP 2019191051
(71) Applicant: DIC Corporation, Tokyo 174-8520 (JP)
(72) Inventor: SHINCHI Tomoaki, Takaishi-shi, Osaka 592-0001 (JP)
(74) Representative: Beckmann, Claus
(86) International application number: PCT/JP2020/037396
(87) International publication number: WO 2021/075271

(57) **Abstract**

The present invention provides a method for manufacturing a molded article obtained by double-belt press-molding a thermosetting prepreg, the method being characterized in that the thermosetting prepreg is covered with a release film during the molding, and the width of the prepreg is smaller by 1-25 mm than that of the release film. This manufacturing method suppresses burr generation or fiber twisting and exhibits excellent width restriction, and thus is usable in use for automobile members, railroad vehicle members, aerospace machine members, boat and ship members, household equipment members, sporting goods members, light vehicle members, building and civil engineering members, housings for office automation equipment, etc.

## Description

### TECHNICAL FIELD

The present invention relates to a method for manufacturing a molded article.

### BACKGROUND ART

Reinforced fiber composite materials reinforced with reinforced fibers such as carbon fiber and glass fiber are attracting attention for their excellent heat resistance and mechanical strength while being lightweight, and are being increasingly used in various structural applications such as housings for automobile or aircraft or various members. For a fiber reinforced resin composite material, a method for obtaining a cured molded article by autoclave molding, press molding, and winding molding using an intermediate material called prepreg in which reinforced fibers are impregnated with a thermosetting resin, or a method for obtaining a molded article by pultrusion molding in which fibers are cured while being impregnated with the thermosetting resin is used.

As the resin, the thermosetting resin such as an epoxy resin composition having excellent heat resistance and strength is generally used frequently. Among them, the pultrusion molding is performed in order to obtain an elongated molded article. However, the pultrusion molding has problems that productivity is low and uniformity when molding a flat plate and surface property of the molded article are inferior. On the other hand, double belt press molding has been studied as a method for obtaining an elongated flat plate molded article.

When the prepreg using the thermosetting resin such as the epoxy resin composition is molded using a double belt press, there is a problem that the prepreg softens when being cured at a high temperature, and the fibers and the resin in the prepreg are easily spread laterally. Therefore, it has been proposed to prevent outflow of the fibers and the resin by forming the upper, lower, left, and right surfaces by four endless belts (see, for example, PTL 1).

However, when this width-restricting belt is used, the resin and the fibers flow into a small gap, and hardened burrs are generated, and when continuously molding the elongated molded article, there has been problems that the burrs remaining on the endless belt are mixed in the molded article and foreign matter traces are transferred to a surface of the molded article. In addition, as a post-process, work such as removing the burrs is required, which causes a problem of inferior productivity.

### CITATION LIST

### PATENT LITERATURE

PTL 1: JP-A-6-210745

### SUMMARY OF INVENTION

### TECHNICAL PROBLEM

An object to be solved by the present invention is to provide a method for manufacturing a molded article having excellent width restriction by suppressing burr generation and fiber twisting in double belt press molding.

### SOLUTION TO PROBLEM

The present inventors have found that a method for manufacturing a molded article, including double-belt press molding a thermosetting prepreg coated with a release film, is excellent in moldability, and have completed the present invention.

That is, the present invention relates to a method for manufacturing a molded article obtained by double belt press molding a thermosetting prepreg, in which the thermosetting prepreg is coated with a release film during molding, and a width of the prepreg is 1 to 25 mm smaller than that of the release film.

### ADVANTAGEOUS EFFECTS OF INVENTION

The molded article obtained by the manufacturing method of the present invention is excellent in moldability, and thus can be suitably used for, for example, automobile members, railroad vehicle members, aerospace machine members, ship members, household equipment members, sporting goods members, light vehicle members, building and civil engineering members, and housings for OA equipment and the like.

### BRIEF DESCRIPTION OF DRAWINGS

FIG. 1 is a schematic diagram illustrating an aspect of coating a thermosetting prepreg with a release film when viewed from a traveling direction of the thermosetting prepreg in double belt press molding of an embodiment of the present invention (Release film tri-folding).
FIG. 2 is a schematic diagram illustrating an aspect of coating the thermosetting prepreg with the release film when viewed from the traveling direction in the double belt press molding of the embodiment of the present invention (Release film sealing).

### DESCRIPTION OF EMBODIMENTS

A method for manufacturing a molded article of the present invention is a method for manufacturing a molded article obtained by double belt press molding a thermosetting prepreg, in which the thermosetting prepreg is coated with a release film during molding, and a width of the prepreg is 1 to 25 mm smaller than that of the release film.

In a molding method of the present invention, since the thermosetting prepreg is coated with the release film during molding, even when the prepreg is softened by heat during molding and is applied with pressure, a resin and fibers are not spread laterally, and the prepreg is prevented from adhering to a belt, and thus it is possible to suppress burr generation and fiber twisting and obtain an elongated (2 m or more) molded article having excellent width restriction.

The thermosetting prepreg contains a thermosetting resin composition and reinforced fibers, but the thermosetting resin composition preferably contains a radically polymerizable resin and a polymerization initiator because curability and interlaminar shear strength of the molded article are further improved.

Examples of the radically polymerizable resin include epoxy (meth)acrylate, urethane modified epoxy (meth)acrylate, urethane (meth)acrylate, unsaturated polyester, and the like, but urethane modified epoxy (meth)acrylate or urethane (meth)acrylate is preferred because the curability and the interlaminar shear strength of the molded article are further improved. These radically polymerizable resins can be used alone or in combination of two or more.

The urethane modified epoxy (meth)acrylate, which is obtained by reacting an epoxy (meth)acrylate having an average number of hydroxyl groups per molecule of 1.8 to 2.6 with a polyisocyanate having an average number of isocyanate groups per molecule of 2 to 3, is preferred because workability and the interlaminar shear strength of the molded article are further improved.

The epoxy (meth)acrylate can be obtained by reacting an epoxy resin with (meth)acrylic acid and/or (meth)acrylic acid anhydride. As an example of a method for setting the average number of hydroxyl groups per molecule to 1.8 to 2.6, it can be controlled by setting the average number of epoxy groups and the average number of hydroxyl groups of the epoxy resin and the number of moles of (meth)acrylic acid and/or (meth)acrylic acid anhydride at the time of reaction.

Examples of the epoxy resin include: bisphenol type epoxy resins such as bisphenol A type epoxy resin, bisphenol F type epoxy resin, bisphenol fluorene type epoxy resin, and biscresol fluorene type epoxy resin; novolac type epoxy resins such as phenol novolac type epoxy resin and cresol novolac type epoxy resin; glycidyl ethers of phenol such as oxazolidone modified epoxy resin and brominated epoxy resins of these resins; glycidyl ethers of polyhydric alcohols such as dipropylene glycol diglycidyl ether, trimethylolpropane triglycidyl ether, diglycidyl ether of an alkylene oxide adduct of bisphenol A, and diglycidyl ether of hydrogenated bisphenol A; alicyclic epoxy resins such as 3,4-epoxy-6-methylcyclohexylmethyl-3,4-epoxy-6-methylcyclohexane carboxylate, and 1-epoxyethyl-3,4-epoxycyclohexane; glycidyl esters such as diglycidyl phthalate, diglycidyl tetrahydrophthalate, diglycidyl p-oxybenzoate, and glycidyl dimerate; glycidylamines such as tetraglycidyldiaminodiphenylmethane, tetraglycidyl-m-xylenediamine, triglycidyl-p-aminophenol, and N,N-diglycidylaniline; and heterocyclic epoxy resins such as 1,3-diglycidyl-5,5-dimethylhydantoin, and triglycidyl isocyanurate. Among them, bisphenol type epoxy resin, novolac type epoxy resin, or oxazolidone modified epoxy resin is more preferred because a molded article having more excellent mechanical strength and heat resistance can be obtained, and further, bisphenol type epoxy resin or oxazolidone modified epoxy resin is more preferred because a cured product having an excellent balance between interlaminar shear strength and mechanical strength can be obtained. The epoxy equivalent of the epoxy resin is preferably 150 to 400 from the viewpoint of the heat resistance and the curability. Note that these epoxy resins can be used alone or in combination of two or more.

The reaction between the epoxy resin and (meth)acrylic acid is preferably carried out at 60°C to 140°C in the presence of an esterification catalyst. Further, a polymerization inhibitor or the like can also be used.

The polyisocyanate used for producing the urethane modified epoxy (meth)acrylate preferably has an average number of isocyanate groups per molecule of 2 to 3, but examples of the polyisocyanate that can be used include: aromatic polyisocyanates such as diphenylmethane diisocyanate (4,4'-diphenylmethane diisocyanate, 2,4'-diphenylmethane diisocyanate, or 2,2'-diphenylmethane diisocyanate, or a mixture thereof), modified diphenylmethane diisocyanates such as carbodiimide modified diphenylmethane diisocyanate, nurate modified diphenylmethane diisocyanate, biuret modified diphenylmethane diisocyanate, urethane imine modified diphenylmethane diisocyanate, and polyol modified diphenylmethane diisocyanate modified with polyol having a number average molecular weight of 1,000 or less such as diethylene glycol and dipropylene glycol, tolylene diisocyanate, trizine diisocyanate, polymethylene polyphenyl polyisocyanate, xylylene diisocyanate, 1, 5-naphthalenediocyanate, and tetramethylxylene diisocyanate; alicyclic polyisocyanates such as isophorone diisocyanate, hydrogenated diphenylmethane diisocyanate, hydrogenated xylylene diisocyanate, and norbornene diisocyanate; and aliphatic polyisocyanates such as hexamethylene diisocyanate, nurate modified hexamethylene diisocyanate, biuret modified hexamethylene diisocyanate, hexamethylene diisocyanate adduct, and diisocyanate dimerate. Further, these polyisocyanates can be used alone or in combination of two or more.

The molar ratio (NCO/OH) of the isocyanate group (NCO) of the polyisocyanate to the hydroxyl group (OH) of the epoxy (meth)acrylate in the production of the urethane modified epoxy (meth)acrylate is preferably in the range of 0.6 to 1.1, and more preferably in the range of 0.7 to 1.0 because it is more excellent in balance between workability (tack property) due to an increase in molecular weight by chain extension reaction and fluidity of the resin.

The urethane (meth)acrylate is preferably urethane (meth)acrylate, which is a reaction product of a polyisocyanate compound using polymethylene polyphenyl polyisocyanate as an essential raw material and a compound having a hydroxyl group using a compound having a hydroxyl group and a (meth)acryloyl group as an essential raw material, because it is possible to obtain a molded article having excellent workability and moldability, and various physical properties such as interlaminar shear strength and heat resistance.

The polymethylene polyphenyl polyisocyanate is represented by the following general formula (1).

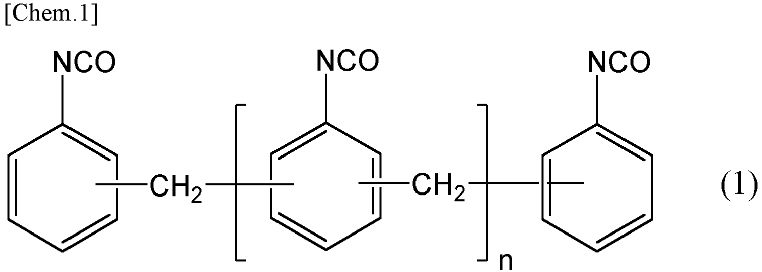

### (In the formula, n is an integer of 1 or more.)

Examples of the compound having a hydroxyl group and a (meth)acryloyl group of the urethane (meth)acrylate include hydroxyalkyl (meth)acrylate and epoxy (meth)acrylate. Note that these compounds having a hydroxyl group and (meth)acryloyl group can be used alone or in combination of two or more.

The molar ratio (NCO/OH) of the isocyanate group (NCO) of the isocyanate compound to the hydroxyl group (OH) of the compound (a2) having a hydroxyl group in the raw material of the urethane (meth)acrylate (A) is preferably 0.1 to. 1.5, and more preferably 0.3 to 1.2.

The polymerization initiator contained in the thermosetting resin composition is preferably an organic peroxide, and examples of the polymerization initiator include a diacyl peroxide compound, a peroxy ester compound, a hydroperoxide compound, a ketone peroxide compound, an alkyl perester compound, a percarbonate compound, and a peroxyketal, and can be appropriately selected depending on molding conditions. These polymerization initiators can be used alone or in combination of two or more.

Among them, the polymerization initiator having a temperature for obtaining a 10-hour half-life of 70°C or higher and 100°C or lower is preferred because the prepreg has a long life at room temperature and the curing proceeds in a short time by heating. By using the polymerization initiators, a molded article having excellent interlaminar shear strength can be obtained in a short time. Examples of such a polymerization initiator include 1,6-bis(t-butylperoxycarbonyloxy)hexane, 1,1-bis(t-butylperoxy)cyclohexane, 1,1-bis(t-amylperoxy)cyclohexane, 1,1-bis(t-hexylperoxy)cyclohexane, t-butylperoxydiethyl acetate, t-butylperoxyisopropyl carbonate, t-amylperoxyisopropyl carbonate, t-hexylperoxyisopropyl carbonate, di-tert-butylperoxyhexahydroterephthalate, t-amylperoxytrimethylhexanoate, and t-hexylperoxy-2-ethylhexanoate.

Further, the thermosetting resin composition preferably contains an ethylenically unsaturated monomer because the curability and the interlaminar shear strength of the molded article are further improved.

Examples of the ethylenically unsaturated monomer include: styrene compounds such as styrene, methylstyrene, halogenated styrene, and divinylbenzene; monofunctional (meth)acrylate compounds such as methyl (meth)acrylate, ethyl (meth)acrylate, propyl (meth)acrylate, butyl (meth)acrylate, 2-ethylhexyl (meth)acrylate, cyclohexyl (meth)acrylate, isobornyl (meth)acrylate, benzyl (meth)acrylate, methylbenzyl (meth)acrylate, phenoxyethyl (meth)acrylate, methylphenoxyethyl (meth)acrylate, morpholine (meth)acrylate, phenylphenoxyethyl acrylate, phenylbenzyl (meth)acrylate, phenyl methacrylate, dicyclopentenyl (meth)acrylate, dicyclopentenyloxyethyl (meth)acrylate, and dicyclopentanyl methacrylate; hydroxyl group-containing (meth)acrylate compounds such as hydroxyethyl (meth)acrylate, hydroxypropyl (meth)acrylate, and hydroxybutyl (meth)acrylate; and di(meth)acrylate compounds such as ethylene glycol di(meth)acrylate, propylene glycol di(meth)acrylate, 1,4-butanediol di(meth)acrylate, 1,6-hexanediol di(meth)acrylate, bisphenol di(meth)acrylate, and 1,4-cyclohexanedimethanol di(meth)acrylate. They can be used alone or in combination of two or more.

Among them, from the viewpoint of odors in a work environment, handling of hazardous materials, and the mechanical strength and the heat resistance of the molded article, monofunctional (meth)acrylates having a molecular weight of 150 to 250 are preferred, phenoxyethyl (meth)acrylate, methylphenoxyethyl (meth)acrylate, benzyl (meth)acrylate, and methylbenzyl (meth)acrylate are more preferred, and phenoxyethyl (meth)acrylate and benzyl (meth)acrylate are even more preferred.

Examples of the reinforced fiber include organic fibers such as carbon fiber, glass fiber, silicon carbide fiber, alumina fiber, boron fiber, metal fiber, aramid fiber, vinylon fiber, and Tetoron fiber, but since it is possible to obtain the molded article having higher strength and higher elasticity, carbon fiber or glass fiber is preferred, and carbon fiber is more preferred. These reinforced fibers can be used alone or in combination of two or more.

The thermosetting prepreg can be produced by a known method, but is obtained, for example, by impregnating the thermosetting resin with the reinforced fiber, sandwiching it with a release PET film, and pressurizing it with a pressure roll.

As the thermosetting prepreg, a unidirectional material in which reinforced fiber tows are aligned in one direction, a material obtained by laminating unidirectional materials, a woven fabric, a non-woven fabric made of shortly cut reinforced fibers, or the like can be used.

The basis weight (weight per 1 m² of fiber) of the reinforced fiber is not particularly limited, but is preferably 10 g/m² to 650 g/m². The basis weight of 10 g/m² or more is preferred because the fiber width does not vary so much and the mechanical properties are improved. The basis weight of 650 g/m² or less is preferred because impregnation of the resin is good. The basis weight is more preferably 50 to 500 g/m², and particularly preferably 50 to 300 g/m².

The content of the reinforced fiber in the thermosetting prepreg is preferably in the range of 15 to 85 mass%, more preferably in the range of 35 to 80 mass% because the mechanical strength of the obtained molded article is further improved.

Further, the thickness of the thermosetting prepreg is preferably in the range of 0.02 to 1 mm, and more preferably 0.05 to 0.5 mm.

The width of the thermosetting prepreg is preferably in the range of 10 to 500 mm, and more preferably in the range of 50 to 300 mm.

The gel time at 150°C of the thermosetting prepreg is preferably 10 to 90 seconds, and more preferably 15 to 60 seconds, because the productivity is further improved.

The gel time and cure time of the prepreg in the present invention are measured with a curast meter 7 TYPE P (manufactured by JSR Trading Co., Ltd.).

In the manufacturing method of the present invention, the thermosetting prepreg is coated with the release film during molding, and examples of the release film include a PET base material, a nylon base material, a polyvinylidene chloride base material, and release paper, but the PET base material is preferred from the viewpoint of heat resistance, releasability, and film strength.

Further, the release film is preferably a film having heat resistance because the film strength at high temperature is excellent, and the heat distortion temperature (18.5 kg/cm²) is preferably 60°C or higher, more preferably 80°C or higher, and even more preferably 100°C or higher. Note that in the present invention, the heat distortion temperature is the temperature of deflection under load specified in JIS K7191, which is the temperature when the specified deflection under the measured load (18.5 kg/cm²) is reached.

The thickness of the release film is preferably 15 to 150 µm, more preferably 25 to 100 µm, and even more preferably 35 to 75 µm from the viewpoint of maintaining the film strength at high temperatures and the cost.

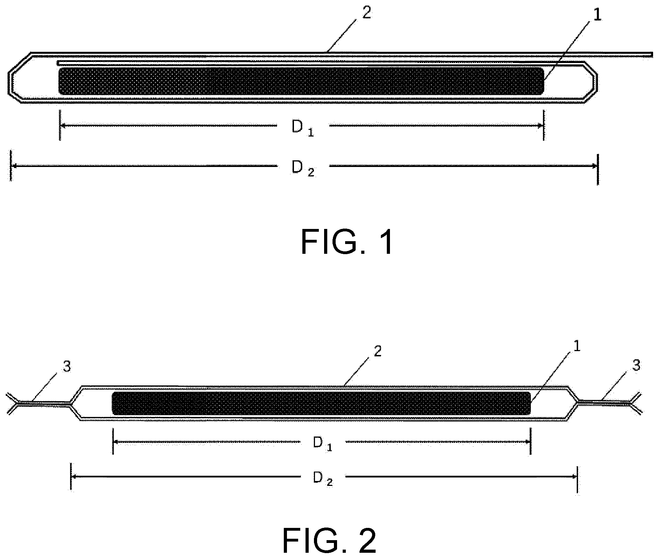

Next, an aspect of coating the thermosetting prepreg with the release film will be described. FIGs. 1 and 2 are schematic diagrams illustrating an aspect of coating a thermosetting prepreg 1 with a release film 2 when viewed from a traveling direction of the thermosetting prepreg in double belt press molding in an embodiment of the present invention. It should be noted that the dimensional ratio in the drawings does not always match the actual dimensional ratio.

As the aspect of coating the thermosetting prepreg with the release film, upper, lower, left, and right surfaces of the prepreg are coated with the release film when viewed from the traveling direction of the thermosetting prepreg, but from the viewpoint of continuous workability of the elongated article, it is preferred that the prepreg is coated with the release film folded in three (FIG. 1), and the release film sandwiching the prepreg from above and below is sealed to the specified width by heat or ultrasonic sealing treatment to coat the prepreg (FIG. 2).

The width restricted by the release film is preferably the same as the target molding width.

The thermosetting prepreg coated on the release film is preferably one in which a plurality of prepregs are laminated, and one in which 2 to 6 prepregs are laminated is preferred from the viewpoint of quality stability.

A width D₁ of the thermosetting prepreg when molding with a double belt press machine is 1 to 25 mm smaller than a width D₂ of the release film in order to suppress the flow of the prepreg due to heat and pressure, but is preferably 1 to 20 mm smaller than the width D₂ of the release film because the fiber twisting can be further reduced. Note that the width D₁ of the thermosetting prepreg and the width D₂ of the release film are lengths in the left-right direction when viewed from the traveling direction in the double belt press molding, and the width D₂ of the release film is a length of a range enclosed by sealing or folding.

The manufacturing method of the present invention is a method for inserting the thermosetting prepreg coated with the release film into a double belt press apparatus, to obtain the molded article.

As the double belt press apparatus, a known one can be used, but an isobaric method is preferred in which a prepreg base material is uniformly pressurized at a constant pressure regardless of whether or not a width regulating device is attached to a side surface of the double belt press apparatus. Further, the double belt press apparatus having a mechanism for cooling the molded article at an outlet of the double belt press machine is preferred.

A press pressure for double belt press molding is preferably 0.1MPa to 2MPa because the interlaminar shear strength of the molded article is further improved.

A press temperature for double belt press molding is preferably 80°C to 220°C from the viewpoint of the productivity.

The molded article obtained by the manufacturing method of the present invention is excellent in moldability, and thus can be suitably used for, for example, automobile members, railroad vehicle members, aerospace machine members, ship members, household equipment members, sporting goods members, light vehicle members, building and civil engineering members, and housings for OA equipment and the like.

### [Examples]

Hereinafter, the present invention will be described in more detail with reference to specific examples. Note that the heat distortion temperature (18.5 kg/cm²) of a PET roll (the release film) used was 240°C.

### (Production Example 1: Preparation of thermosetting prepreg (1))

50 parts by mass of a mixture of polymethylene polyphenyl polyisocyanate and MDI ("Millionate MR-200" produced by Tosoh Corporation), 50 parts by mass of 4,4'-diphenylmethane diisocyanate, 66 parts by mass of hydroxyethyl methacrylate, 31 parts by mass of EO adduct of bisphenol A ("New Pole BPE-20" produced by Sanyo Chemical Industries, Ltd., hydroxyl group equivalent; 204 g/eq), 40 parts by mass of phenoxyethyl methacrylate, and 3 parts by mass of a polymerization initiator ("Trigonox 122-C80" produced by Kayaku Akzo Corporation, organic peroxide) were mixed, to obtain a thermosetting resin composition.

The thermosetting resin composition obtained above was impregnated into carbon fiber ("T700SC" produced by Toray Industries, Inc.) using a prepreg manufacturing apparatus so that the volume content is 50% with respect to the basis weight of carbon fiber of 100 g/m², to obtain a thermosetting prepreg (1). The thickness of the thermosetting prepreg (1) was 0.15 mm.

### (Example 1)

Four thermosetting prepregs (1) obtained in Production Example 1 were laminated in a length of 1.5 m and a width of 58 mm, inserted into a 12 m long PET roll having a thickness of 50 µm and folded in three to a width of 60 mm, and molded under heat and pressure for 3 minutes in a double belt press machine with a heating and pressurizing block of 30 cm at a feed rate of 0.1 m/min, a belt temperature of 160°C, and a pressure of 0.8 MPa, to obtain an elongated molded article (1) having a length of 10 m.

### (Example 2)

Four thermosetting prepregs (1) obtained in Production Example 1 were laminated in a length of 1.5 m and a width of 58 mm, inserted into a 12 m long PET roll having a thickness of 50 µm and folded in three to a width of 60 mm, and molded under heat and pressure for 0.5 minutes in a double belt press machine with a heating and pressurizing block of 30 cm at a feed rate of 0.6 m/min, a belt temperature of 190°C, and a pressure of 0.3 MPa, to obtain an elongated molded article (2) having a length of 10 m.

### (Example 3)

Four thermosetting prepregs (1) obtained in Production Example 1 were laminated in a length of 1.5 m and a width of 50 mm, inserted into a 12 m long PET roll having a thickness of 50 µm and folded in three to a width of 60 mm, and molded under heat and pressure for 3 minutes in a double belt press machine with a heating and pressurizing block of 30 cm at a feed rate of 0.1 m/min, a belt temperature of 160°C, and a pressure of 0.8 MPa, to obtain an elongated molded article (3) having a length of 10 m.

### (Example 4)

Four thermosetting prepregs (1) obtained in Production Example 1 were laminated in a length of 1.5 m and a width of 40 mm, inserted into a 12 m long PET roll having a thickness of 50 µm and folded in three to a width of 60 mm, and molded under heat and pressure for 3 minutes in a double belt press machine with a heating and pressurizing block of 30 cm at a feed rate of 0.1 m/min, a belt temperature of 160°C, and a pressure of 0.8 MPa, to obtain an elongated molded article (4) having a length of 10 m.

### (Comparative Example 1)

Four thermosetting prepregs (1) obtained in Production Example 1 were laminated in a length of 1.5 m and a width of 58 mm, sandwiched from above and below by a 12 m long release PET film having a thickness of 50 µm, and molded under heat and pressure for 3 minutes in a double belt press machine with a heating and pressurizing block of 30 cm at a feed rate of 0.1 m/min, a belt temperature of 160°C, and a pressure of 0.8 MPa, to obtain an elongated molded article (R1) having a length of 10 m.

### (Comparative Example 2)

Four thermosetting prepregs (1) obtained in Production Example 1 were laminated in a length of 1.5 m and a width of 58 mm, sandwiched from above and below by a 12 m long release PET film having a thickness of 50 µm, the width was restricted to 60 mm from left and right by a silicon rubber sheet, and molded under heat and pressure for 3 minutes in a double belt press machine with a heating and pressurizing block of 30 cm at a feed rate of 0.1 m/min, a belt temperature of 160°C, and a pressure of 0.8 MPa, to obtain an elongated molded article (R2) having a length of 10 m.

### [Evaluation of moldability (burr)]

The moldability (burr) of the obtained molded article was evaluated according to the following criteria.
A: No burr
C: With burrs

### [Evaluation of moldability (width)]

The moldability (width) of the obtained molded article was evaluated according to the following criteria.
A: Less than target molding width (60 mm) ± 2 mm
C: Not less than target molding width (60 mm) ± 2 mm

### [Evaluation of moldability (fiber twisting)]

The moldability (fiber twisting) of the obtained molded article was evaluated according to the following criteria.
A: No fiber twisting
B: With some fiber twisting
C: With fiber twisting

Table 1 shows the evaluation results of the molded articles (1) to (4) obtained above.

**[Table 1]**

| Table 1 | | Example 1 | Example 2 | Example 3 | Example 4 |
|---|---|---|---|---|---|
| Evaluation | Moldability (burr) | A | A | A | A |
| | Moldability (width) | A | A | A | A |
| | Moldability (fiber twisting) | A | A | A | B |

Table 2 shows the evaluation results of the molded articles (R1) to (R3) obtained above.

**[Table 2]**

| Table 2 | | Comparative Example 1 | Comparative Example 2 |
|---|---|---|---|
| Evaluation | Moldability (burr) | C | A |
| | Moldability (width) | C | C |
| | Moldability (fiber twisting) | C | C |

It was found that the methods for manufacturing the molded articles of the present invention of Examples 1 to 4 were excellent in moldability.

On the other hand, Comparative Example 1 is an example in which the left and right sides of the thermosetting prepreg are not coated with the release film during molding, and it was found that the resin and fibers were spread laterally and the moldability (burr, width, and fiber twisting) was inferior.

Comparative Example 2 is an example in which the thermosetting prepreg is sandwiched from left and right by a silicon sheet instead of the release film during molding, and it was found that the silicon rubber sheet moved due to pressure and the moldability (width and fiber twisting) was inferior.

### REFERENCE SIGNS LIST

1: Thermosetting prepreg
2: Release film
3: Sealing portion of release film
D₁: Width of thermosetting prepreg
D₂: Width of release film.

## Claims

1. A method for manufacturing a molded article obtained by double belt press molding a thermosetting prepreg, wherein during molding, upper, lower, left, and right surfaces of the thermosetting prepreg are coated with a release film when viewed from a traveling direction of the thermosetting prepreg, and a width of the prepreg is 1 to 25 mm smaller than that of the release film.

2. The method for manufacturing the molded article according to claim 1, wherein a heat distortion temperature (18.5 kg/cm²) of the release film is 60°C or higher.

3. The method for manufacturing the molded article according to claim 1 or 2, wherein a press pressure of the double belt press molding is 0.1MPa to 2MPa.

4. The method for manufacturing the molded article according to any one of claims 1 to 3, wherein a press temperature of the double belt press molding is 80°C to 220°C.
